# EUROPEAN PATENT APPLICATION

(11) **EP 2 677 831 A1**
(43) Date of publication of application: **25.12.2013**
(21) Application number: 12747534.1
(22) Date of filing: 27.01.2012
(51) Int. Cl.: H04W 76/02, H04W 8/24

(54) **MOBILE COMMUNICATION METHOD AND MOBILITY MANAGEMENT NODE**

(30) Priority: 14.02.2011 JP 2011029182
(71) Applicant: NTT DOCOMO, INC., Chiyoda-ku Tokyo 100-6150 (JP)
(72) Inventor: MORITA, Takashi, Tokyo 100-6150 (JP); TANAKA, Itsuma, Tokyo 100-6150 (JP)
(74) Representative: HOFFMANN EITLE
(86) International application number: PCT/JP2012/051840
(87) International publication number: WO 2012/111409

(57) **Abstract**

A mobile communication method according to the present invention includes: a step A of causing a UE to send a MME accommodating an E-UTRAN a "LTE Attach Request" including capability information indicating whether or not the UE supports "VoLTE communications"; and a step B of causing the MME to judge whether or not to establish an IMS APNbearer between the UE and an IMS APN on the basis of the capability information when judging that an APN of the UE is the IMS APN.

## Description

### TECHNICAL FIELD

The present invention relates to a mobile communication method and a mobility management node.

### BACKGROUND ART

According to the international standard specifications for the "VoLTE (Voice over LTE) communications", communications with the SIP (Session Initiation Protocol) can be performed and thereby the "VoLTE communications" can be performed by establishing an IMS APN bearer between a UE (User Equipment: mobile station) and an IMS APN, which is a desired PDN (PDN: Packet Data Network), in the UE Attach procedure to the LTE (Long Term Evolution)/E-UTRAN (Evolved-Universal Terrestrial Radio Access Network).

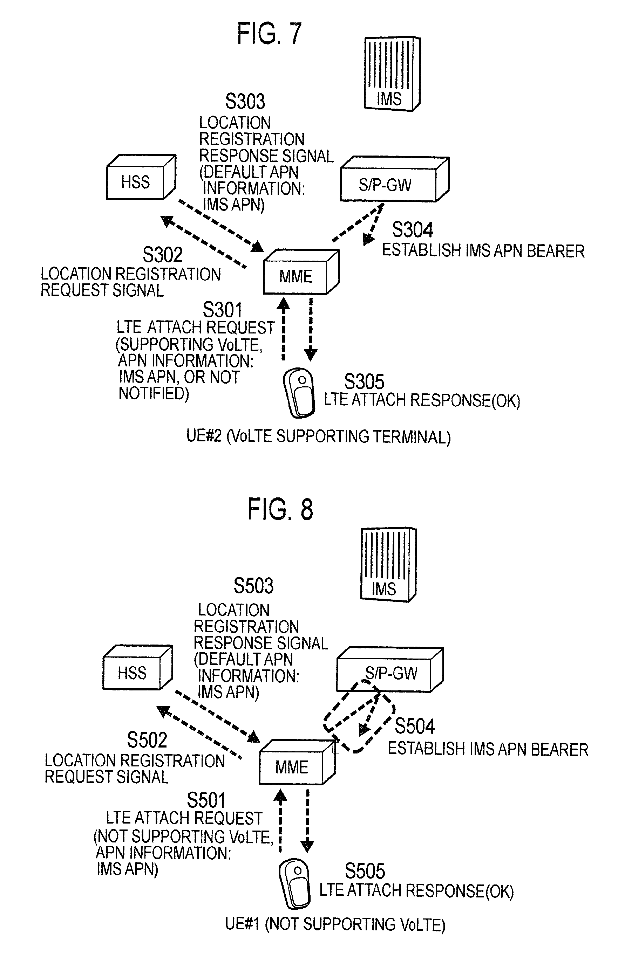

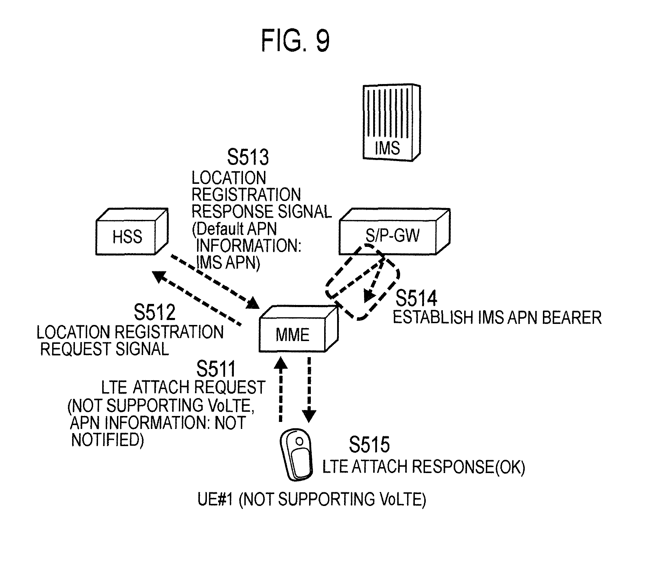

The Attach procedure in a conventional mobile communication system will be described below with reference to Figs. 8 and 9.

Firstly, with reference to Fig. 8, a description will be given of an operation in the case where a UE#1 notifies of APN information in a "LTE Attach Request" in the Attach procedure.

As shown in Fig. 8, in Step S501, the UE#1 not supporting the "VoLTE communications" sends a MME (Mobility Management Entity, mobility management node) the "LTE Attach Request" which includes capability information indicating that the UE#1 does not support the "VoLTE communications" and the APN information indicating an IMS APN.

In Step S502, the MME sends a HSS (Home Subscriber Server, subscriber management server) a location registration request signal to the LTE/E-UTRAN of the UE.

In Step S503, the HSS sends the MME a location registration response signal including Default APN information indicating an IMS APN.

In Step S504, the MME performs processing for connection of the UE#1 with the IMS APN indicated by the APN information in the "LTE Attach Request", and establishes an IMS APN bearer between the UE#1 and the IMS APN.

In Step S505, the MME sends the UE#1 a "LTE Attach Response (OK)" indicating that the Attach procedure is successful.

Secondly, with reference to Fig. 9, a description will be given of an operation in the case where the UE#1 does not notify of the APN information in the "LTE Attach Request" in the Attach procedure.

As shown in Fig. 9, in Step S511, the UE#1 not supporting the "VoLTE communications" sends the MME the "LTE Attach Request" which includes capability information indicating that the UE#1 does not support the "VoLTE communications".

In Step S512, the MME sends the HSS a location registration request signal to the LTE/E-UTRAN of the UE.

In Step S513, the HSS sends the MME a location registration response signal including Default APN information indicating an IMS APN.

In Step S514, the MME performs processing for connection of the UE#1 with the IMS APN indicated by the Default APN information in the location registration response signal, and establishes an IMS APN bearer between the UE#1 and the IMS APN.

In Step S515, the MME sends the UE#1 a "LTE Attach Response (OK)" indicating that the Attach procedure is successful.

### PRIOR ART DOCUMENT

### NON-PATENT DOCUMENT

Non-patent document 1: 3GPP TS23.401

### SUMMARY OF THE INVENTION

### PROBLEM TO BE SOLVED BY THE INVENTION

However, as shown in Figs. 8 and 9, the conventional mobile communication system establishes an IMS APN bearer between the UE#1 and the IMS APN even though the UE#1 does not support the "VoLTE communications", that is, even though the UE#1 performs no communications via the IMS APN. Thus, there is a problem of wasteful consumption of resources.

The present invention has been therefore made in view of the above problem. An objective of the present invention is to provide a mobile communication method and a mobile management node capable of judging whether or not to establish an IMS APN bearer in the UE Attach procedure taking into consideration whether or not a UE supports the "VoLTE communications".

### MEANS FOR SOLVING THE PROBLEM

A first characteristic of the present invention is a mobile communication method including: a step A of causing a mobile station to send a mobility management node accommodating a radio access network supporting only packet-switched communications an attach request signal including capability information indicating whether or not the mobile station supports voice communications via the radio access network; and a step B of causing the mobility management node to judge whether or not to establish a bearer between the mobile station and a service control network on the basis of the capability information when judging that a connection destination network of the mobile station is the service control network.

A second characteristic of the present invention is a mobility management node accommodating a radio access network supporting only packet-switched communications, including: a reception unit configured to receive an attach request signal from a mobile station, the attach request signal including capability information indicating whether or not the mobile station supports voice communications via the radio access network; and a judgment unit configured to judge whether or not to establish a bearer between the mobile station and a service control network on the basis of the capability information when judging that a connection destination network of the mobile station is the service control network.

### EFFECT OF THE INVENTION

As described above, the present invention can provide a mobile communication method and a mobile management node capable of judging whether or not to establish an IMS APN bearer in the UE Attach procedure taking into consideration whether or not a UE supports the "VoLTE communications".

### BRIEF DESCRIPTION OF THE DRAWINGS

[Fig. 1] Fig. 1 is an overall configuration diagram of a mobile communication system according to a first embodiment of the present invention.
[Fig. 2] Fig. 2 is a function block diagram of a MME according to the first embodiment of the present invention.
[Fig. 3] Fig. 3 is a table showing an example of information elements included in an Attach request used in the mobile communication system according to the first embodiment of the present invention.
[Fig. 4] Fig. 4 is a flowchart showing an operation of the MME according to the first embodiment of the present invention.
[Fig. 5] Fig. 5 is a diagram for describing an operation of the mobile communication system according to the first embodiment of the present invention.
[Fig. 6] Fig. 6 is a diagram for describing the operation of the mobile communication system according to the first embodiment of the present invention.
[Fig. 7] Fig. 7 is a diagram for describing the operation of the mobile communication system according to the first embodiment of the present invention.
[Fig. 8] Fig. 8 is a diagram for describing an operation of a conventional mobile communication system.
[Fig. 9] Fig. 9 is a diagram for describing the operation of the conventional mobile communication system.

### MODE FOR CARRYING OUT THE INVENTION

### (Mobile Communication System according to First Embodiment of Present Invention)

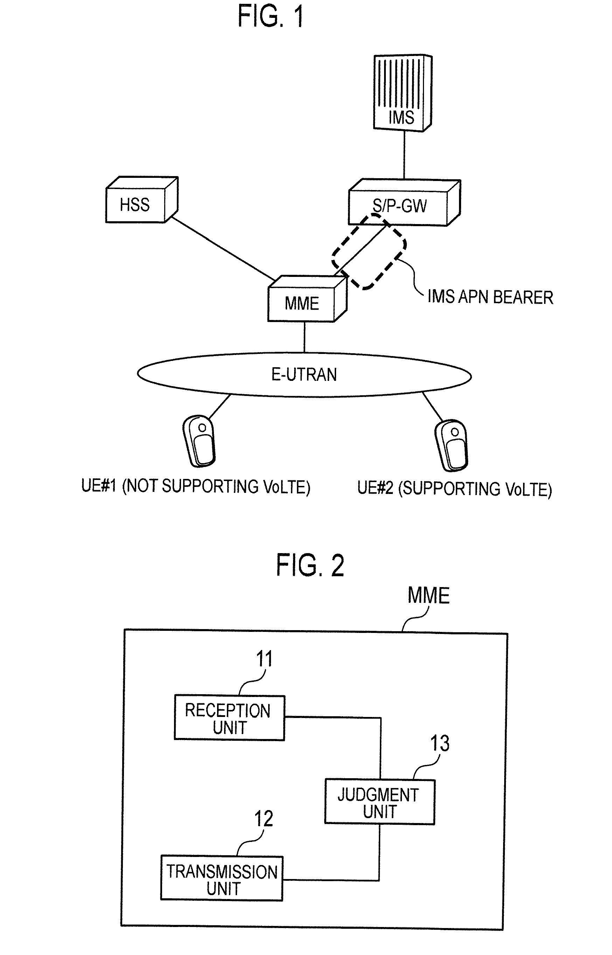

A mobile communication system according to a first embodiment of the present invention will be described with reference to Figs. 1 to 7.

The mobile communication system according to this embodiment is a mobile communication system accommodating the LTE/E-UTRAN. As shown in Fig. 1, the mobile communication system includes an IMS (IP Multimedia Subsystem, service control network), a S/P-GW (Serving/PDN-Gateway, gateway device), and a MME.

In addition, as shown in Fig. 1, a UE#1 is a mobile station not supporting the "VoLTE communications", whereas a UE#2 is a mobile station supporting the "VoLTE communications".

As shown in Fig. 2, the MME includes a reception unit 11, a judgment unit 13, and a transmission unit 12.

The reception unit 11 is configured to receive a "LTE Attach Request" to the LTE/E-UTRAN sent by a UE.

The "LTE Attach Request" includes capability information indicating whether or not the UE supports the "VoLTE communications".

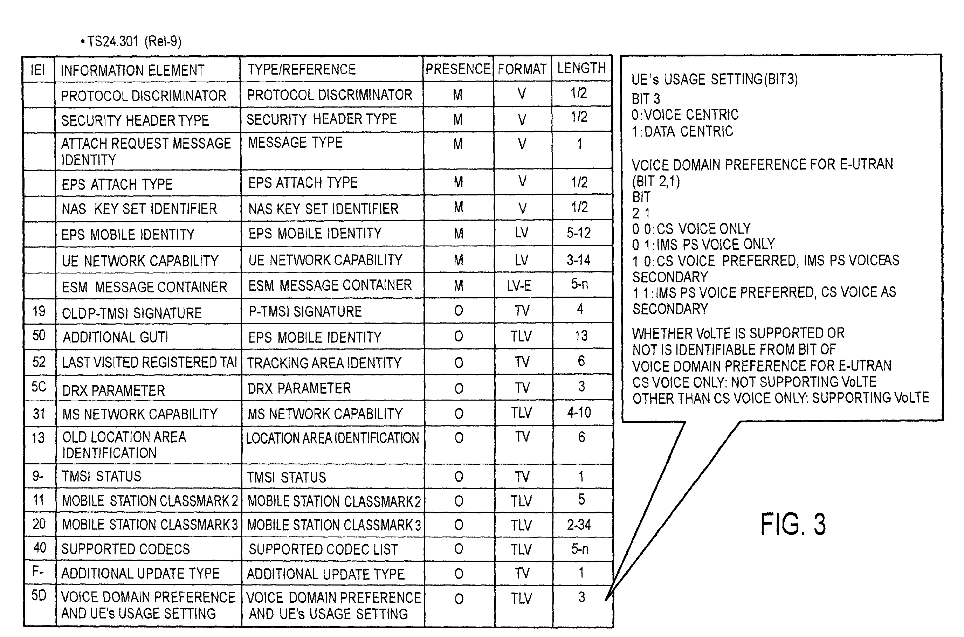

For example, as shown in Fig. 3, such capability information is notified by use of one information element "Voice domain preference and UE's usage setting" in the "LTE Attach Request" specified in 3GPP TS24.301 (Rel-9).

In addition, the "LTE Attach Request" may include APN information indicating an APN desired by the UE.

The reception unit 11 is also configured to receive a location registration response signal sent by a HSS. The location registration response signal includes Default APN information of the UE.

The transmission unit 12 is configured to transmit a location registration request signal to the HSS and to send a "LTE Attach Response" to the UE.

The "LTE Attach Response" includes information (OK/NG) indicating whether or not the UE Attach procedure to the LTE/E-UTRAN is successful.

The judgment unit 13 is configured such that, when judging that the APN of the UE is an IMS APN, it judges whether or not to establish an IMS APN bearer between the UE and the IMS APN on the basis of the capability information included in the "LTE Attach Request".

Here, the judgment unit 13 may be configured to judge whether or not the APN of the UE is an IMS APN in accordance with the APN information included in the "LTE Attach Request".

The judgment unit 13 may also be configured to judge whether or not the APN of the UE is an IMS APN in accordance with the Default APN information of the UE included in the location registration response signal from the HSS when the "LTE Attach Request" includes no APN information.

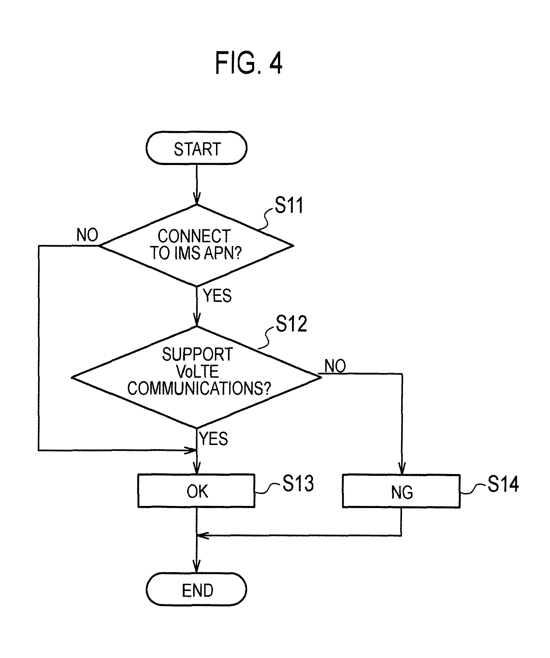

With reference to Figs. 4 to 7, a description will be given below of an example of an operation of the mobile communication system according to the first embodiment of the present invention.

Firstly, an operation of the MME according to this embodiment will be described with reference to Fig. 4.

As shown in Fig. 4, in the UE Attach procedure to the LTE/E-UTRAN, the MME judges in Step S11 whether or not it should connect a UE to an IMS APN, that is, whether or not an APN of the UE is the IMS APN on the basis of APN information included in a "LTE Attach Request" or Default APN information of the UE included in a location registration response signal from the HSS.

If "NO", the operation proceeds to Step S13; if "YES", the operation proceeds to Step S12.

In Step S12, the MME judges whether or not the UE supports the "VoLTE communications" on the basis of capability information included in the "LTE Attach Request".

If "YES", the operation proceeds to Step S13; if "NO", the operation proceeds to Step S14.

In Step S13, the MME establishes an APN bearer between the UE and the desired APN, and sends the UE a "LTE Attach Response (OK)" indicating that the UE Attach procedure to the LTE/E-UTRAN is successful.

In Step S14, the MME establishes no IMS APN bearer between the UE and the IMS APN, and sends the UE a "LTE Attach Response (NG)" indicating that the UE Attach procedure to the LTE/E-UTRAN is unsuccessful.

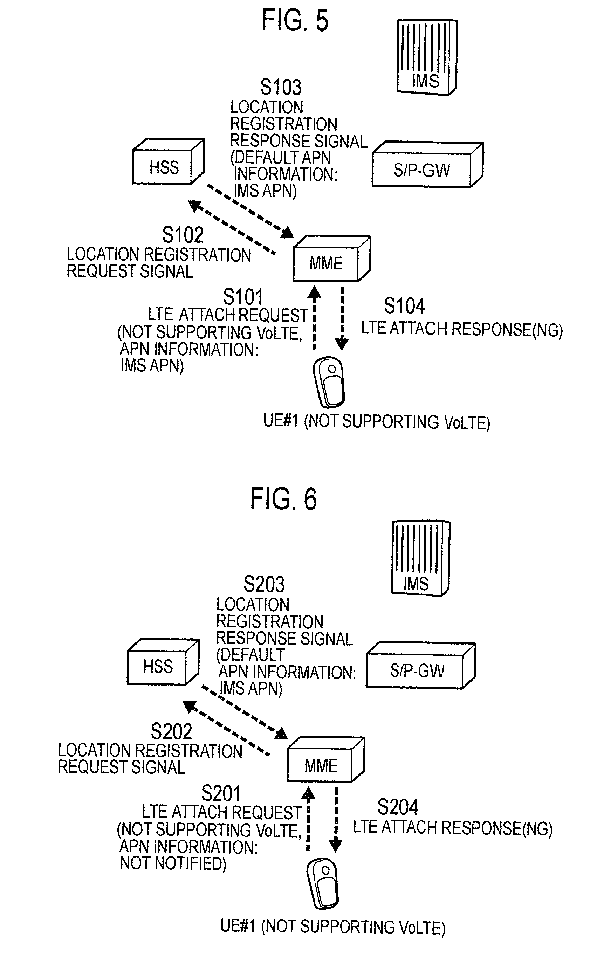

Secondly, the Attach procedure to the LTE/E-UTRAN of the UE#1 not supporting the "VoLTE communications" will be described with reference to Fig. 5.

As shown in Fig. 5, in Step S101, the UE#1 sends the MME a "LTE Attach Request" which includes capability information indicating that the UE#1 does not support the "VoLTE communications" and APN information indicating an IMS APN.

In Step S102, the MME sends the HSS a location registration request signal to the LTE/E-UTRAN of the UE#1.

In Step S103, the HSS sends the MME a location registration response signal including Default APN information indicating an IMS APN.

In Step S104, since the MME judges that the APN of the UE#1 is the IMS APN and that the UE#1 does not support the "VoLTE communications", the MME does not establish an IMS APN bearer between the UE#1 and the IMS APN, and sends the UE#1 a "LTE Attach Response (NG)" indicating that the Attach procedure to the LTE/E-UTRAN of the UE#1 is unsuccessful.

Then, after a predetermined period of time, the UE#1 may again send the MME a "LTE Attach Request" which includes capability information indicating that the UE#1 does not support the "VoLTE communications" and APN information indicating an IMS APN.

Alternatively, the UE#1 may send an "Attach Request" to the UTRAN (Universal Terrestrial Radio Access Network)/GERAN (GSM EDGE Radio Access Network).

Thirdly, the Attach procedure to the LTE/E-UTRAN of the UE#1 not supporting the "VoLTE communications" will be described with reference to Fig. 6.

As shown in Fig. 6, in Step S201, the UE#1 sends the MME a "LTE Attach Request" which includes capability information indicating that the UE#1 does not support the "VoLTE communications".

In Step S202, the MME sends the HSS a location registration request signal to the LTE/E-UTRAN of the UE.

In Step S203, the HSS sends the MME a location registration response signal including Default APN information indicating an IMS APN.

In Step S204, since the MME judges that the APN of the UE#1 is the IMS APN and that the UE#1 does not support the "VoLTE communications", the MME does not establish an IMS APN bearer between the UE#1 and the IMS APN, and sends the UE#1 a "LTE Attach Response (NG)" indicating that the Attach procedure to the LTE/E-UTRAN of the UE#1 is unsuccessful.

Then, after a predetermined period of time, the UE#1 may again send the MME a "LTE Attach Request" which includes capability information indicating that the UE#1 does not support the "VoLTE communications" and APN information indicating an IMS APN.

Alternatively, the UE#1 may send an "Attach Request" to the UTRAN/GERAN.

Fourth, the Attach procedure to the LTE/E-UTRAN of the UE#2 supporting the "VoLTE communications" will be described with reference to Fig. 7.

As shown in Fig. 7, in Step S301, the UE#2 sends the MME a "LTE Attach Request" which includes capability information indicating that the UE#2 supports the "VoLTE communications" and APN information indicating an IMS APN.

Alternatively, in Step S301, the UE#2 sends the MME a "LTE Attach Request" which includes the capability information indicating that the UE#2 supports the "VoLTE communications" but does not include the APN information of the UE#2.

In Step S302, the MME sends the HSS a location registration request signal to the LTE/E-UTRAN of the UE#2.

In Step S303, the HSS sends the MME a location registration response signal including Default APN information indicating an IMS APN.

Since the MME judges that the APN of the UE#2 is the IMS APN and that the UE#2 supports the "VoLTE communications", the MME establishes an IMS APN bearer between the UE#2 and the IMS APN in Step S304, and sends the UE#2 a "LTE Attach Response (OK)" indicating that the Attach procedure to the LTE/E-UTRAN of the UE#2 is successful in Step S305.

The mobile communication system of this embodiment is configured such that, when the MME judges that it should connect the UE#1/UE#2 to an IMS APN, that is, judges that an APN of the UE#1/UE#2 is the IMS APN, the MME judges whether or not the UE#1/UE#2 supports the "VoLTE communications" on the basis of capability information included in a "LTE Attach Request", and judges whether or not to establish an APN bearer between the UE#1/UE#2 and the IMS APN taking a result of the above judgment into consideration. Thus, wasteful consumption of resources can be avoided.

The characteristics of this embodiment described above may be expressed in the following way.

A first characteristic of this embodiment is a mobile communication method. The gist of the mobile communication method is to include: a step A of causing a UE (mobile station) to send a MME (mobility management node) accommodating an E-UTRAN (radio access network supporting only packet-switched communications) a "LTE Attach Request (attach request signal) " including capability information indicating whether or not the UE supports "VoLTE communications (voice communications via the radio access network)"; and a step B of causing the MME to judge whether or not to establish an IMS APN bearer between the UE and an IMS APN (service control network) on the basis of the capability information when judging that an APN (connection destination network) of the UE is the IMS APN.

In the first characteristic of this embodiment, in the step B, the MME may judge whether or not the APN of the UE is the IMS APN in accordance with APN information (connection destination information) included in the "LTE Attach Request".

In the first characteristic of this embodiment, in the step B, the MME may judge whether or not the APN of the UE is the IMS APN in accordance with Default APN information (default connection destination information) of the UE included in a location registration response signal from a HSS (subscriber management server) when no APN information is included in the "LTE Attach Request".

A second characteristic of this embodiment is a MME accommodating an E-UTRAN. The gist of the MME is to include: a reception unit 11 configured to receive a "LTE Attach Request" from a UE, the "LTE Attach Request" including capability information indicating whether or not the UE supports "VoLTE communications"; and a judgment unit 13 configured to judge whether or not to establish an IMS APN bearer between the UE and an IMS APN on the basis of the capability information when judging that an APN of the UE is the IMS APN.

In the second characteristic of this embodiment, the judgment unit 13 may be configured to judge whether or not the APN of the UE is the IMS APN in accordance with APN information included in the "LTE Attach Request".

In the second characteristic of this embodiment, the judgment unit 13 may be configured to judge whether or not the APN of the UE is the IMS APN in accordance with Default APN information of the UE included in a location registration response signal from a HSS when no APN information is included in the "LTE Attach Request".

Note that the operations of the UE#1/UE#2, the MME, the HSS, and the S/P-GW described above may be implemented by means of hardware, a software module executed by a processor, or a combination of both.

The software module may be provided in any type of storage medium such as a RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

The storage medium is connected to the processor so that the processor can read and write information from and to the storage medium. Alternatively, the storage medium may be integrated into the processor. In addition, the storage medium and the processor may be provided in an ASIC. The ASIC may be provided in the UE#1/UE#2, the MME, the HSS, and the S/P-GW. Alternatively, the storage medium and the processor may be provided in the UE#1/UE#2, the MME, the HSS, and the S/P-GW as a discrete component.

Hereinabove, the present invention has been described in detail using the embodiment described above; however, it is apparent to those skilled in the art that the present invention is not limited to the embodiment described herein. Modifications and variations of the present invention can be made without departing from the spirit and scope of the present invention defined by the description of the scope of claims. Thus, what is described herein is for illustrative purpose, and has no intention whatsoever to limit the present invention.

### EXPLANATION OF THE REFERENCE NUMERALS

- IMS: service control network
- HSS: subscriber management server
- S/P-GW: gateway device
- UE#1, UE#2: mobile station
- MME: mobility management node
- 11: reception unit
- 12: transmission unit
- 13: judgment unit

## Claims

1. A mobile communication method comprising:
a step A of causing a mobile station to send a mobility management node accommodating a radio access network supporting only packet-switched communications an attach request signal including capability information indicating whether or not the mobile station supports voice communications via the radio access network; and
a step B of causing the mobility management node to judge whether or not to establish a bearer between the mobile station and a service control network on the basis of the capability information when judging that a connection destination network of the mobile station is the service control network.

2. The mobile communication method according to claim 1, wherein, in the step B, the mobility management node judges whether or not the connection destination network of the mobile station is the service control network in accordance with connection destination information included in the attach request signal.

3. The mobile communication method according to claim 1, wherein, in the step B, the mobility management node judges whether or not the connection destination network of the mobile station is the service control network in accordance with default connection destination information of the mobile station included in a location registration response signal from a subscriber management server when no connection destination information is included in the attach request signal.

4. A mobility management node accommodating a radio access network supporting only packet-switched communications, comprising:
a reception unit configured to receive an attach request signal from a mobile station, the attach request signal including capability information indicating whether or not the mobile station supports voice communications via the radio access network; and
a judgment unit configured to judge whether or not to establish a bearer between the mobile station and a service control network on the basis of the capability information when judging that a connection destination network of the mobile station is the service control network.

5. The mobility management node according to claim 4, wherein the judgment unit judges whether or not the connection destination network of the mobile station is the service control network in accordance with connection destination information included in the attach request signal.

6. The mobility management node according to claim 4, wherein the judgment unit judges whether or not the connection destination network of the mobile station is the service control network in accordance with default connection destination information of the mobile station included in a location registration response signal from a subscriber management server when no connection destination information is included in the attach request signal.
